# EUROPÄISCHE PATENTSCHRIFT

(11) **EP 2 493 727 B1**
(45) Veröffentlichungstag und Bekanntmachung des Hinweises auf die Patenterteilung: **24.12.2014**
(21) Anmeldenummer: 10771006.3
(22) Anmeldetag: 13.10.2010
(51) Int. Cl.: B60R 22/46

(54) **SICHERHEITSGURTAUFROLLER MIT EINER STRAFFVORRICHTUNG**
SEATBELT RETRACTOR WITH A TENSIONING DEVICE
ENROULEUR DE CEINTURE DE SÉCURITÉ AVEC UN DISPOSITIF DE PRETENSION

(30) Priorität: 30.10.2009 DE 102009051453
(43) Veröffentlichungstag der Anmeldung: 05.09.2012
(73) Patentinhaber: Autoliv Development AB, 447 83 Vårgårda (SE)
(72) Erfinder: KRAUS, Juri, 22179 Hamburg (DE); CLUTE, Günter, 25336 Elmshorn (DE)
(74) Vertreter: Müller Verweyen
(86) Internationale Anmeldenummer: PCT/EP2010/006253
(87) Internationale Veröffentlichungsnummer: WO 2011/050909

(56) Entgegenhaltungen:
- WO-A1-2009/124664
- DE-B4- 10 066 389
- DE-U1- 29 812 801
- US-A1- 2001 048 042

## Beschreibung

Die Erfindung betrifft einen Sicherheitsgurtaufroller mit einer Straffvorrichtung mit den Merkmalen des Oberbegriffs von Anspruch 1.

Sicherheitsgurtaufroller mit Straffvorrichtungen haben im Allgemeinen die Aufgabe, in einem Unfall vor dem Beginn der Vorwärtsverlagerung des Insassen vorhandene Gurtlose aus dem Sicherheitsgurt herauszuziehen, und dadurch den Insassen so früh wie möglich an die Fahrzeugverzögerung anzukoppeln, und den zur Verfügung stehenden Weg für eine kraftbegrenzte Vorwärtsverlagerung des Insassen zu maximieren. Als Antrieb solcher Straffvorrichtungen haben sich pyrotechnische Gasgeneratoren bewährt, mittels derer in kürzester Zeit ein sehr hoher Druck in einem Rohr erzeugt werden kann. Der Druck in dem Rohr wird dann durch eine Kraftübertragungseinrichtung, wie z.B. eine Kette aus Massekörpern, und ein mit der Gurtaufwickelwelle gekoppeltes Antriebsrad in eine Straffbewegung der Gurtaufwickelwelle in Aufwickelrichtung umgewandelt. Ein Problem solcher Straffvorrichtungen ist, dass der durch die Aktivierung des pyrotechnischen Gasgenerators erzeugte Druck in ungünstigen Fällen sehr hoch ansteigen und ein Bersten des Rohres der Straffvorrichtung zur Folge haben kann. Ferner kann der in dem Rohr nach dem Ende der Straffbewegung noch vorhandene Druck eine nachfolgende kraftbegrenzte Gurtbandauszugsbewegung stören und zu einer kurzzeitigen Überhöhung des Kraftbegrenzungsniveaus führen.

Zur Lösung dieses Problems ist es aus der DE 195 45 795 C1 bereits bekannt, in einer Gasgeneratoraufnahme des Rohres eine Öffnung vorzusehen, die mit einer Wandung einer bestimmten Wandstärke verschlossen ist, so dass sich die Öffnung bei einem Überschreiten eines bestimmten Druckes durch Verformung und Bersten der Wandung selbst öffnet. In diesem Fall kann es passieren, dass beim Öffnen der Öffnung eine Stichflamme aus der Öffnung heraustritt. Sofern die Stichflamme auf brennbare Materialien, wie z.B. brennbare Innenverkleidungsteile des Fahrzeuges oder Kleidungsstücke des Insassen, trifft, kann die Stichflamme durch den dadurch entstehenden Brand zu einer neben dem eigentlichen Unfall zusätzlichen Gefährdung des Insassen führen.

Aus der DE 103 17 192 A1 ist bereits ein Gurtstraffer bekannt, bei dem an das Überdruckventil eine ein bestimmtes freies Volumen beinhaltende Kammer angeschlossen ist. Durch die Kammer wird verhindert, dass die heißen Verbrennungsgase direkt freigesetzt werden. Ferner wird durch die Kammer die bei der Freigabe der Öffnung entstehende Geräuschemission verringert; die Kammer wirkt quasi als Schalldämpfer. Die Kammer ist aus einem Gehäuse geformt, welches von außen an das Rohr des Gurtstraffers angesetzt ist. Durch die Kammer werden dadurch sowohl der Platzbedarf als auch die Kosten und der Herstellungsaufwand für den Sicherheitsgurtaufroller erhöht.

Ferner sind auch Gurtstraffer bekannt, bei denen in dem Rohr eine ständig offene Öffnung vorgesehen ist, welche an einer definierten Stelle des Rohres angeordnet ist und erst nach einer vorbestimmten Länge der Straffbewegung von dem ersten den Druckraum begrenzenden Kolben passiert wird. Nachdem der Kolben die Öffnung passiert hat, kann der in dem Druckraum vorhandene Druck durch die Öffnung entweichen. Auch bei dieser Öffnung besteht das Problem, dass die durch die Öffnung austretenden heißen Gase angrenzende Bauteile oder Kleidungsstücke des Insassen in Brand setzen oder beschädigen können.

Aus der DE 100 66 389 B4 ist ferner ein pyrotechnischer Gurtstraffer mit einer in einem Rohr geführten Kraftübertragungseinrichtung bekannt. Das Rohr weist eine Öffnung auf, durch welche Drehelemente aus dem Rohr austreten können, so dass sie die Gurtwelle durch Anlage an einem Zugelement antreiben. Aufgabe der Erfindung ist es, einen kostengünstigen und bauraumgünstigen Sicherheitsgurtaufroller mit einer Straffvorrichtung zu schaffen, bei dem verhindert ist, dass die aus der Öffnung austretenden heißen Gase zu einer Gefährdung des Insassen führen oder angrenzende Bauteile beschädigen.

Die Lösung der Aufgabe erfolgt erfindungsgemäß durch einen Sicherheitsgurtaufroller mit einer Straffvorrichtung mit den Merkmalen des Anspruchs 1. Weitere bevorzugte Ausführungsformen der Erfindung sind den Unteransprüchen, den Figuren und der zugehörigen Beschreibung zu entnehmen.

Zur Lösung der Aufgabe wird erfindungsgemäß vorgeschlagen, dass die Öffnung durch eine dünne Wandung verschlossen ist und bei einem Überschreiten eines in dem Rohr vorhandenen Druckes durch Zerstörung der Wandung zu öffnen ist, und die Öffnung im Bereich der Gasgeneratoraufnahme des Rohrs zur Aufnahme des Gasgenerators vorgesehen ist.

Der Vorteil der vorgeschlagenen Lösung besteht darin, dass der Hohlraum eben durch die Teile des Sicherheitsgurtaufrollers selbst gebildet wird, d.h. der Hohlraum entsteht bei dem Zusammenbau des Sicherheitsgurtaufrollers automatisch. Ein gesondertes einen zusätzlichen Bauraum benötigendes Bauteil zur Schaffung des Hohlraumes, wie dies bei der aus dem Stand der Technik bekannten Lösung erforderlich ist, ist damit nicht erforderlich. Aufgrund des in dem Sicherheitsgurtaufroller genutzten Hohlraums, der zumindest in kleinerer Form bereits vorhanden ist, benötigt der vorgeschlagene Sicherheitsgurtaufroller nicht mehr oder nur geringfügig mehr Bauraum als ein konventioneller Sicherheitsgurtaufroller mit einer Straffvorrichtung und einer nach außen gerichteten Öffnung. Bei einem Überschreiten eines bestimmten Druckes in dem Rohr zerbricht die Wandung in der Öffnung, so dass die Öffnung geöffnet wird, und der Überdruck in dem Rohr durch das Freisetzen der Gase aus der Öffnung abgebaut wird. Beim Freisetzen der heißen Gase werden diese dann in den Hohlraum statt in die freie Umgebung abgegeben, wodurch das Austreten einer offenen sichtbaren nach außen austretenden Flamme verhindert wird. Unter einem Hohlraum im Sinne der Erfindung soll hier nicht ein hermetisch dicht abgeschlossener Raum verstanden werden, sondern jeder Raum, in den die heißen Gase freigesetzt werden können. Eine besondere Kapselung des Hohlraumes ist nicht erforderlich.

Nachfolgend wird die Erfindung anhand eines bevorzugten Ausführungsbeispieles näher erläutert. In den Figuren sind im Einzelnen zu erkennen.
- Fig.1:: Straffvorrichtung für einen Sicherheitsgurtaufroller;
- Fig.2:: Sicherheitsgurtaufroller mit seitlich angeordneter Straffvorrichtung in Perspektivdarstellung;
- Fig.3:: Sicherheitsgurtaufroller mit Straffvorrichtung in einem Ausschnitt geschnitten in Sicht von oben;

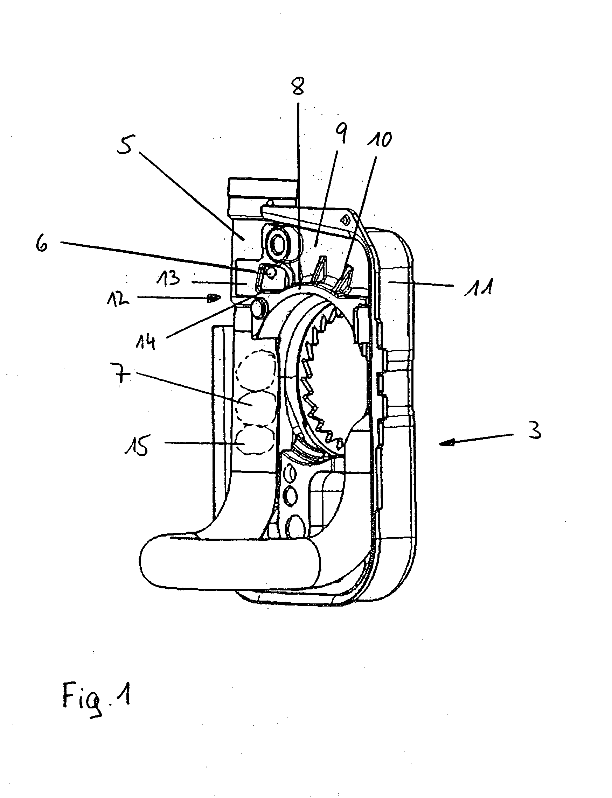

In der Fig.1 ist eine Straffvorrichtung 3 für einen Sicherheitsgurtaufroller zu erkennen, welche ein Gehäuse 11 und eine Antriebseinheit 12 umfasst. Die Antriebseinheit 12 ist gebildet aus einem Rohr 7, einer in dem Rohr 7 geführten Kraftübertragungseinrichtung in Form einer Kette 15 aus Massekörpern und einem in einer an dem Ende des Rohres angeordneten Gasgeneratoraufnahme 5 aufgenommenen Gasgenerator. Bei einer Aktivierung des Gasgenerators wird in dem Rohr 7 in einem Raum vor dem ersten Massekörper ein Druck aufgebaut und daraufhin die Kette 15 der Massekörper zu einer Straffbewegung angetrieben.

In dem Bereich der Gasgeneratoraufnahme 5 ist in dem Rohr 7 eine durch eine dünne Wandung verschlossene Öffnung 6 vorgesehen. Bei einem Überschreiten eines bestimmten Druckes in dem Rohr 7 zerbricht die Wandung in der Öffnung 6, so dass die Öffnung 6 geöffnet ist, und der Überdruck in dem Rohr 7 durch das Freisetzen der Gase aus der Öffnung 6 abgebaut wird. Die Öffnung 6 wirkt dadurch als ein den Druck in dem Rohr 7 begrenzendes Überdruckventil. Alternativ kann die Öffnung 6 auch bereits geöffnet sein und an einer anderen Stelle des Rohres 7 angeordnet sein, so dass der Druck aus dem Rohr 7 erst nach dem Passieren des als Kolben wirkenden ersten Massekörpers entweichen kann. Eine solche Öffnung wird auch als PRV (Pressure Release Valve) bezeichnet.

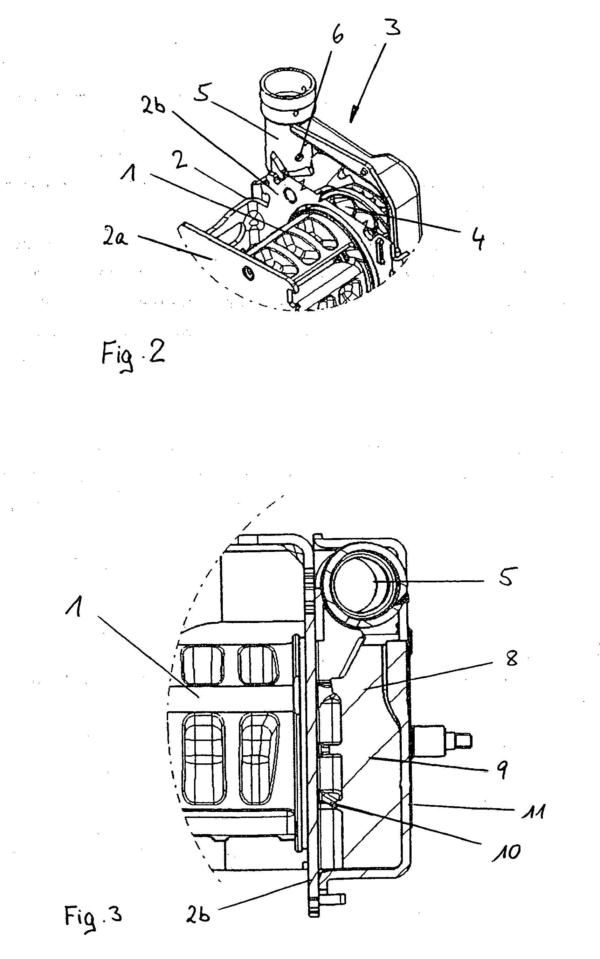

Das Rohr 7 liegt mit der Gasgeneratoraufnahme 5 im Bereich der Öffnung 6 an einer Haltefläche 13 an, die im Bereich der Öffnung 6 eine die Öffnung 6 freigebende Ausnehmung 14 aufweist. An dem Gehäuse 11 ist ein Hohlraum 9 vorgesehen, der durch die Außenwand des Gehäuses 11 selbst und eine Führungswand 8 begrenzt ist, die Teil des Gehäuses 11 ist und mit Rippen 10 versehen ist. Die Führungswand 8 dient der Führung der aus dem Rohr 7 ausgetretenen Massekörper während des Eingriffs in das in Fig.2 dargestellte Antriebsrad 4. Die Öffnung 6 mündet in den Hohlraum 9, so dass die beim Öffnen der Öffnung 6 freigesetzten heißen Gase in den Hohlraum 9 und nicht direkt in die Umgebung abgegeben werden.

Die in Fig.1 dargestellte Straffvorrichtung 3 wird dann seitlich an einen Rahmen 2 eines Sicherheitsgurtaufrollers angeordnet, wie in Fig.2 zu erkennen ist. Der Rahmen 2 des Sicherheitsgurtaufrollers ist U-förmig mit zwei gegenüberliegenden Rahmenschenkeln 2a und 2b ausgebildet, wobei in den gegenüberliegenden Rahmenschenkeln 2a und 2b jeweils eine Öffnung vorgesehen ist, in der eine Gurtaufwickelwelle 1 des Sicherheitsgurtaufrollers drehbar gelagert ist. Auf der Gurtaufwickelwelle 1 ist ein Antriebsrad 4 drehfest oder über eine Kupplung drehfest verbindbar angeordnet. Damit das Antriebsrad 4 in der Darstellung in Fig.2 sichtbar ist, wurde die Führungswand 8 hier weggeschnitten. Der Rahmenschenkel 2b, an dem die Straffvorrichtung 3 seitlich angeordnet ist, bildet in dem zusammengebauten Zustand des Sicherheitsgurtaufrollers ebenfalls eine Begrenzungswand für den Hohlraum 9, so dass sich in dem in den Fig.2 und 3 gezeigten zusammengebauten Zustand ein durch das Gehäuse 11, die Führungswand 8 und den Rahmenschenkel 2b begrenzter Hohlraum 9 ergibt.

Die Führungswand 8 ist mit Rippen 10 versehen, welche die Führungswand 8 einerseits versteifen und andererseits durch eine Vergrößerung der Oberfläche eine Kühlungsfunktion für die auftreffenden heißen Gase haben. Die aus der Öffnung 6 freigegebenen Gase werden auf die Führungswand 8 geleitet, welche durch ihre eigentliche Funktion der Führung der Massekörper beim Eingriff in das Antriebsrad 4 bereits eine derart hohe Festigkeit aufweist, dass sie der Belastung durch die auftreffenden Gase ohne Beschädigung standhält. Alternativ oder zusätzlich zu den Rippen 10 kann der Hohlraum 9 auch mit einer Wolle aus einem unter der Hitzeeinwirkung der Gase nicht brennbaren Material, wie z.B. Stahlwolle, gefüllt sein. Durch die vorgesehene nichtbrennbare Wolle ist in dem Hohlraum 9 ein Werkstoff mit einer sehr großen Oberfläche vorhanden, welcher die Hitze der auftreffenden Gase in kürzester Zeit aufnehmen kann, ohne dabei selbst zerstört zu werden, und dadurch eine sehr effektive Kühlung der Gase bewirkt.

## Patentansprüche

1. Sicherheitsgurtaufroller mit einer Straffvorrichtung (3) mit:
- einer pyrotechnischen Antriebseinheit (12) zum Antreiben einer Gurtaufwickelwelle (1) des Sicherheitsgurtaufrollers in Aufwickelrichtung, gebildet durch einen Gasgenerator, der bei einer Aktivierung einen Druck in einem Rohr (7) erzeugt, und einer in dem Rohr (7) geführten durch den Druck antreibbaren Kraftübertragungseinrichtung, und
- einer in dem Rohr (7) angeordneten Öffnung (6), wobei
- an dem Sicherheitsgurtaufroller ein durch die Bauteile des Sicherheitsgurtaufrollers gebildeter Hohlraum (9) vorgesehen ist, und
- die Öffnung (6) in den Hohlraum (9) mündet, und
- die Straffvorrichtung (3) ein Gehäuse (11) aufweist, und
- der Hohlraum (9) durch das Gehäuse (11) der Straffvorrichtung (3) begrenzt ist,
**dadurch gekennzeichnet, dass**
- die Öffnung (6) durch eine dünne Wandung verschlossen ist und bei einem Überschreiten eines in dem Rohr vorhandenen Druckes durch Zerstörung der Wandung zu öffnen ist, und
- die Öffnung (6) im Bereich einer Gasgeneratoraufnahme (5) des Rohres (7) zur Aufnahme des Gasgenerators vorgesehen ist.

2. Sicherheitsgurtaufroller nach einem der vorangegangenen Ansprüche, **dadurch gekennzeichnet, dass**
- der Sicherheitsgurtaufroller einen Rahmen (2) aufweist, und
- der Hohlraum (9) durch den Rahmen (2) des Sicherheitsgurtaufrollers begrenzt ist.

3. Sicherheitsgurtaufroller nach einem der vorangegangenen Ansprüche, **dadurch gekennzeichnet, dass**
- die Straffvorrichtung (3) eine Führungswand (8) zur wenigstens abschnittsweisen Führung der Kraftübertragungseinrichtung aufweist, und
- der Hohlraum (9) durch die Führungswand (8) begrenzt ist.

4. Sicherheitsgurtaufroller nach einem der vorangegangenen Ansprüche, **dadurch gekennzeichnet, dass**
- an den den Hohlraum (9) begrenzenden Bauteilen des Sicherheitsgurtaufrollers Rippen (10) vorgesehen sind.

5. Sicherheitsgurtaufroller nach einem der vorangegangenen Ansprüche, **dadurch gekennzeichnet, dass**
- das Rohr (7) im Randbereich des Sicherheitsgurtaufrollers angeordnet ist, und
- die Öffnung (6) an der zur Innenseite des Sicherheitsgurtaufrollers weisenden Seite des Rohres (7) angeordnet ist.

6. Sicherheitsgurtaufroller nach einem der vorangegangenen Ansprüche, **dadurch gekennzeichnet, dass**
- das Rohr (7) mit der der Öffnung (6) gegenüberliegenden Seite an einer Unterstützungsfläche anliegt.

7. Sicherheitsgurtaufroller nach einem der vorangegangenen Ansprüche, **dadurch gekennzeichnet, dass**
- das Rohr (7) im Bereich der Öffnung (6) an einer Haltefläche (13) an dem Sicherheitsgurtaufroller gehalten ist,
und
- die Haltefläche (13) eine die Öffnung (6) freigebende Ausnehmung (14) aufweist.

8. Sicherheitsgurtaufroller nach einem der vorangegangenen Ansprüche, **dadurch gekennzeichnet, dass**
- in dem Hohlraum (9) ein Mittel zum Kühlen der aus der Öffnung (6) tretenden Gase vorgesehen ist.

9. Sicherheitsgurtaufroller nach Anspruch 8, **dadurch gekennzeichnet, dass** das Mittel zum Kühlen durch eine nicht brennbare Wolle gebildet ist.

10. Sicherheitsgurtaufroller nach Anspruch 8, **dadurch gekennzeichnet, dass** das Mittel durch eine oder mehrere Kühlungsrippen gebildet ist.

## Claims

1. A seat belt retractor including a tensioning device (3) including:
- a pyrotechnic drive unit (12) for driving a belt winding shaft (1) of the seat belt retractor in the take-up direction, formed by a gas generator which upon an activation generates a pressure in a tube (7), and a force transmission device guided in the tube (7) and drivable by the pressure, and
- an opening (6) disposed in the tube (7), wherein
- a cavity (9) formed by the components of the seat belt retractor is provided on the seat belt retractor, and
- the opening (6) opens into the cavity (9), and
- the tensioning device (3) includes a housing (11), and
- the cavity (9) is delimited by the housing (11) of the tensioning device (3), **characterised in that**
- the opening (6) is closed by a thin wall and is to be opened by destruction of the wall upon an exceeding of a pressure present in the tube, and
- the opening (6) is provided in the region of a gas generator opening (5) of the tube (7) for accommodating the gas generator.

2. The seat belt retractor according to one of the preceding claims, **characterised in that**
- the seat belt retractor includes a frame (2), and
- the cavity (9) is delimited by the frame (2) of the seat belt retractor.

3. The seat belt retractor according to one of the preceding claims, **characterised in that**
- the tensioning device (3) includes a guide wall (8) for at least sectional guiding of the force transmission device, and
- the cavity (9) is delimited by the guide wall (8).

4. The seat belt retractor according to one of the preceding claims, **characterised in that**
- ribs (10) are provided on the components of the seat belt retractor which delimit the cavity (9).

5. The seat belt retractor according to one of the preceding claims, **characterised in that**
- the tube (7) is disposed in the edge region of the seat belt retractor, and
- the opening (6) is disposed on the side of the tube (7) facing towards the inner side of the seat belt retractor.

6. The seat belt retractor according to one of the preceding claims, **characterised in that**
- the tube (7) abuts on a support surface with the side opposite the opening (6).

7. The seat belt retractor according to one of the preceding claims, **characterised in that**
- the tube (7) is held in the region of the opening (6) on a retaining surface (13) on the seat belt retractor, and
- the retaining surface (13) includes an opening (14) freeing the opening (6).

8. The seat belt retractor according to one of the preceding claims, **characterised in that**
- a means for cooling the gases escaping from the opening (6) is provided in the cavity (9).

9. The seat belt retractor according to claim 8, **characterised in that** the means for cooling is formed by a non-flammable wool.

10. The seat belt retractor according to claim 8, **characterised in that** the means is formed by one or more cooling ribs.

## Revendications

1. Enrouleur de ceinture de sécurité avec un dispositif de prétension (3), comprenant :
- une unité d'entraînement pyrotechnique (12) destinée à entraîner un arbre d'enroulement de ceinture (1) de l'enrouleur de ceinture de sécurité dans une direction d'enroulement, formée par un générateur de gaz, qui génère une pression dans un tube (7) lors d'une activation, et un dispositif de transmission de force pouvant être entraîné par la pression guidé dans le tube (7), et
- une ouverture (6) située dans le tube (7), dans lequel
- une cavité (9) formée par les éléments structuraux de l'enrouleur de ceinture de sécurité se trouve sur l'enrouleur de ceinture de sécurité, et
- l'ouverture (6) débouche dans la cavité (9), et
- le dispositif de prétension (3) comporte un boîtier (11), et
- la cavité (9) est limitée par le boîtier (11) du dispositif de prétension (3), **caractérisé en ce que**
- l'ouverture (6) est fermée par une paroi fine et destinée à être ouverte par destruction de la paroi lors d'un dépassement d'une pression présente dans le tube, et
- l'ouverture (6) se trouve dans la zone d'un logement de générateur de gaz (5) du tube (7) pour recevoir le générateur de gaz.

2. Enrouleur de ceinture de sécurité selon l'une des revendications précédentes, **caractérisé en ce que**
- l'enrouleur de ceinture de sécurité comporte un cadre (2), et
- la cavité (9) est limitée par le cadre (2) de l'enrouleur de ceinture de sécurité.

3. Enrouleur de ceinture de sécurité selon l'une des revendications précédentes, **caractérisé en ce que**
- le dispositif de prétension (3) comporte une paroi de guidage (8) destinée à guider au moins sur certaines parties le dispositif de transmission de force, et
- la cavité (9) est limitée par la paroi de guidage (8).

4. Enrouleur de ceinture de sécurité selon l'une des revendications précédentes, **caractérisé en ce que**
- des ailettes (10) se trouvent sur les éléments structuraux de l'enrouleur de ceinture de sécurité limitant la cavité (9).

5. Enrouleur de ceinture de sécurité selon l'une des revendications précédentes, **caractérisé en ce que**
- le tube (7) est situé dans la zone de bord de l'enrouleur de ceinture de sécurité, et
- l'ouverture (6) est située sur le côté du tube (7) dirigé vers le côté intérieur de l'enrouleur de ceinture de sécurité.

6. Enrouleur de ceinture de sécurité selon l'une des revendications précédentes, **caractérisé en ce que**
- le tube (7) appuie avec le côté opposé à l'ouverture (6) contre une surface de support.

7. Enrouleur de ceinture de sécurité selon l'une des revendications précédentes, **caractérisé en ce que**
- le tube (7) est maintenu dans la zone de l'ouverture (6) sur une surface de maintien (13) sur l'enrouleur de ceinture de sécurité, et
- la surface de maintien (13) comporte un évidement (14) libérant l'ouverture (6).

8. Enrouleur de ceinture de sécurité selon l'une des revendications précédentes, **caractérisé en ce que**
- dans la cavité (9) se trouve un moyen destiné à refroidir les gaz s'échappant de l'ouverture (6).

9. Enrouleur de ceinture de sécurité selon la revendication 8, **caractérisé en ce que** le moyen de refroidissement est formé par une laine non combustible.

10. Enrouleur de ceinture de sécurité selon la revendication 8, **caractérisé en ce que** le moyen est formé par une ou plusieurs ailettes de refroidissement.
